# EUROPEAN PATENT SPECIFICATION

(11) **EP 1 029 483 B1**
(45) Date of publication and mention of the grant of the patent: **04.10.2001**
(21) Application number: 99830082.6
(22) Date of filing: 18.02.1999
(51) Int. Cl.: A47J 27/08

(54) **Cover for pressure pots**
Deckel für Dampfdruckkochtöpfe
Couvercle pour des cocottes minute

(43) Date of publication of application: 23.08.2000
(73) Proprietor: Tutto S.p.A., 20094 Corsico (Milano) (IT)
(72) Inventor: Morando, Mauro, 20090 Cusago (Milano) (IT)
(74) Representative: Tansini, Elio Fabrizio

(56) References cited:
- EP-A- 0 108 203
- EP-A- 0 139 772
- US-A- 1 907 528
- US-A- 5 678 721

## Description

The present invention relates to a cover for pressure pots.

As is well known, the covers provided for the operation under pressure of pots or containers for culinary use are generally fitted with appropriate movable jaws presenting grip portions able to engage the lower bands of the upper edges of the pots whereto they are coupled in such a way as to hold the covers themselves against such edges even when the pressure of the steam inside the pressures climbs considerably.

In some known types of covers for pressure pots, for instance, two opposed jaws are provided, supported by a yoke-shaped bar which is raised or lowered by the rotation of a manoeuvring knob provided with a threaded stem inserted in the cover itself.

The covers summarily described above, in addition to being impractical due to their bulk, also have a reduced aesthetic value since the mechanism for controlling the jaws and the jaws themselves are fully in view above the covers.

To overcome such limitations, other types of covers are also known, comprising each a box body able to house the mechanism for controlling the jaws and defining the base of the cover itself which is fitted with a sealing gasket provided to be set against the upper edge of a suitably sized pot.

The box body is delimited by a cover element which hides from view both the jaws and the control mechanism. From the cover element emerges a manoeuvring knob which allows, depending on the direction of rotation according to which it is turned, to engage or disengage the movable jaws with respect to the edge of a pot.

This last known technique, though it is aesthetically more acceptable since the control mechanism and in part the jaws are invisible, nonetheless does present some limitations especially pertaining to the constructive and assembly complexity, the weight and bulk of the control mechanism itself which determine quite large thicknesses of the cover as a whole.

It is also known from document EP 139772 a steam pressure cooker consisting of a lower pot and a cover unit sealing the lower pot.

The cover unit presents a lower lid and an upper lid; this latter contains two half-lids each of which is able to rotate about its own axis of rotation parallel to the central axis of the pot (geometrically vertical) relative to the lower lid and lower pot; further the axes of rotation lie eccentric to the pot's central axis and diametrically opposite each other with respect to the axis swivel mechanism rotatably supported concentrically on the lower lid.

Opening and closing of the cover unit relative to the lower pot is accomplished simply by rotating the swivel mechanism.

During the process of opening, both half-lids perform a semicircular motion corresponding to their eccentric bearing at the swivel mechanism therefore the flanges no longer engage under the pot rim.

It is then possible to close the pot by rotating the swivel mechanism in the opposite direction until the half-lids match up again into a complete cover unit through an overlapping action.

In this situation the technical task set as the basis of the present invention is to devise a cover for pressure pots able substantially to overcome the limitations and drawbacks mentioned above.

The specified technical task is substantially accomplished by a cover for pressure pots according to the appended claims.

The description shall now be provided of a preferred but not exclusive embodiment of a cover for pressure pots according to the present invention, illustrated in the accompanying drawings, wherein:

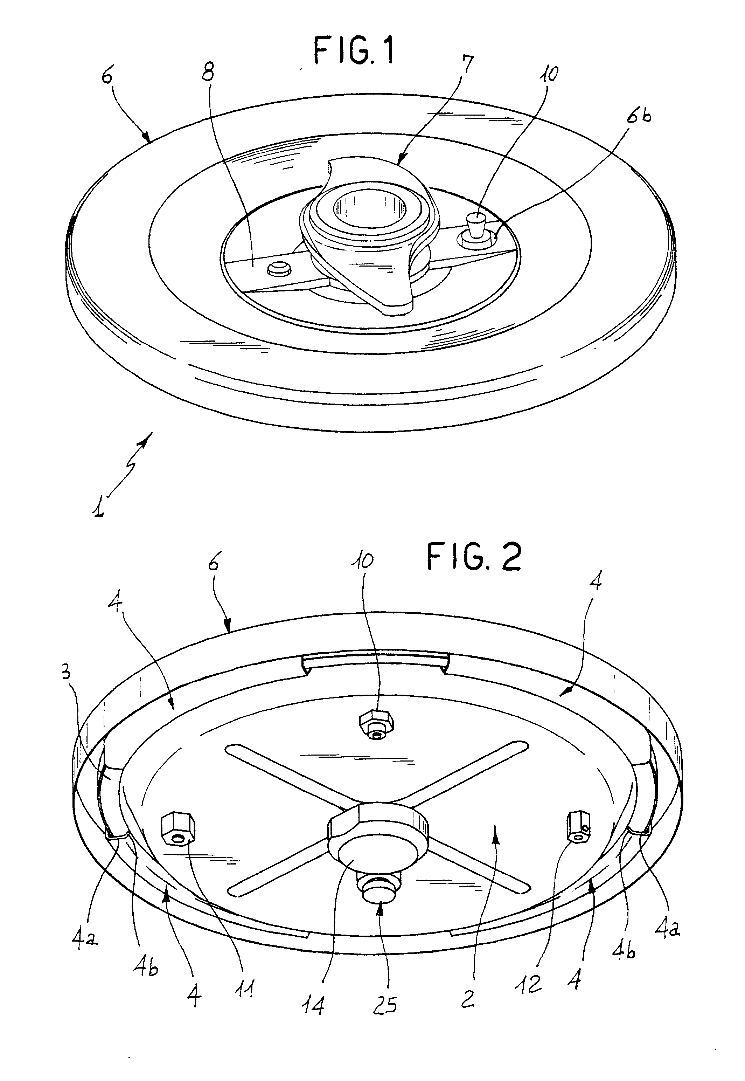

- Figure 1 shows a perspective top view of the cover according to the invention;
- Figure 2 shows a perspective bottom view of the cover of Figure 1;
- Figure 3 shows a perspective and exploded view of the cover of Figure 1;

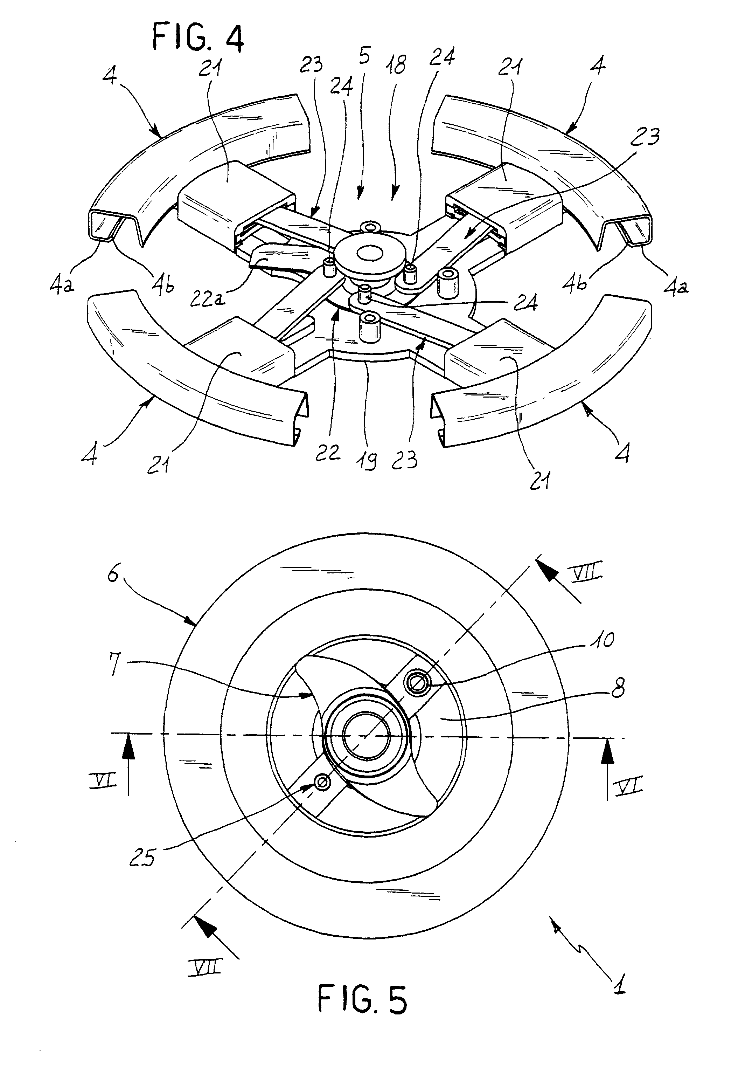

- Figure 4 presents a perspective top view of the control mechanism and of the movable jaws of the cover of Figure 1;
- Figure 5 is a top view of the cover of Figure 1;
- Figure 6 shows a section according to the VI-VI plane of Figure 5;
- Figure 7 shows a section according to the VII-VII plane of Figure 5; and
- Figure 8 shows a perspective exploded view of the components shown in Figure 4

With reference to the mentioned figures, the cover for pressure pots according to the invention is indicated in its entirety with the number 1.

It comprises a box body 2 defining the base of the cover and peripherally provided with a flap 2a able to house a ring sealing gasket 3 presenting a substantially "C" shaped cross section.

On the outer part of the flap 2a bear four movable jaws 4 presenting grip portions 4a able to engage the outer profile and to be set in correspondence with a terminal projection 4b against the lower band of an upper edge of a pot provided for coupling to the cover, not shown in the accompanying drawings.

The movable jaws 4 and the related grip portions 4a can be moved from a disengaged position to an engaged position and vice versa with respect to the upper edge of the pot by means of an original control mechanism 5 able to impose to the jaws 4 themselves sliding motions in radial direction with respect to the box body 2 which determine the shift of the jaws between said disengaged and engaged positions.

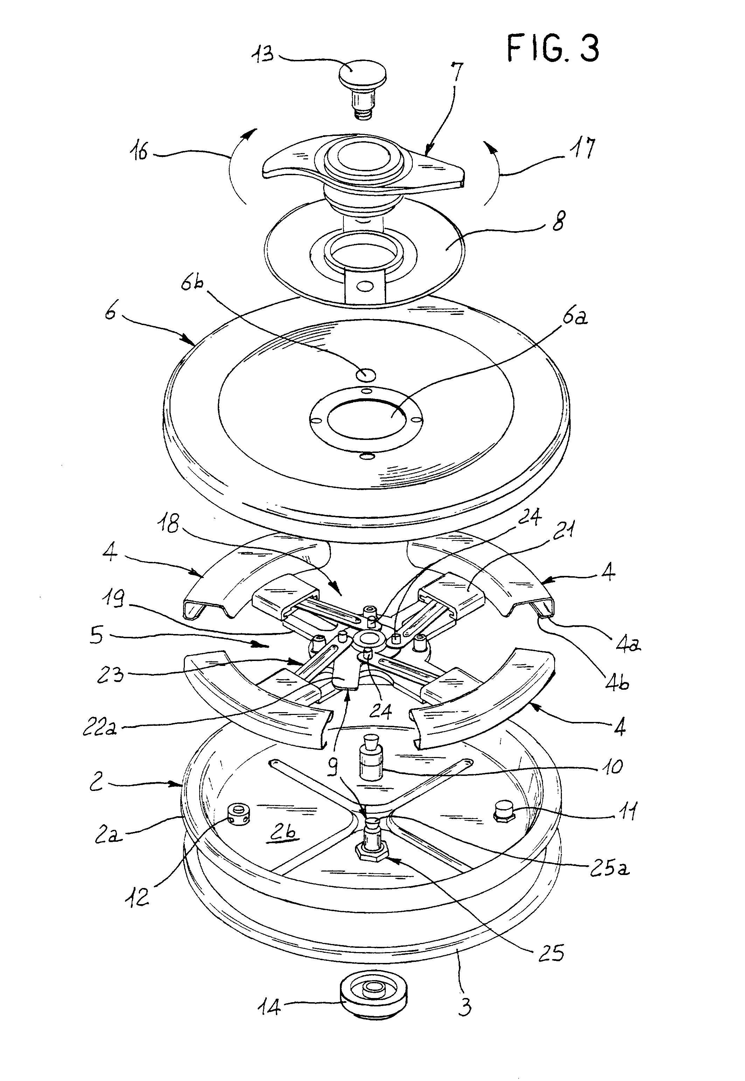

The control mechanism 5 is completely housed inside a compartment 2b (Fig. 3) defined by the box body 2 and it is closed by a cover element 6 which extends externally to the flap 2a thereof in such a way as to cover from above and laterally also the movable jaws 4.

From a central hole 6a of the cover element 6 emerges a manoeuvring element 7 pivotally coupled to a base plate 8 placed in contact with the cover element 6 itself around said central hole 6a.

A safety device 9 prevents the manoeuvring element 7 from moving for the disengagement of the jaws 4 from the edge of the pot when pressure therein exceeds a pre-set value, for instance 0.1-0.2 bar.

An operating valve 10 known in itself, for instance calibrated to 0.6-0.8 bar, emerges from an opening 6b of the cover element 6.

Other safety valves, for instance a first safety valve 11 calibrated to 1-1.2 bar and a second safety valve 12 of the fusible type with activation pressure at 1.2-1.4 bar are fastened to the bottom of the box body 2.

A central pivot pin with head 13 traverses the manoeuvring element 7, the cover element 6, the control mechanism 5 and the box body 2 and is terminally coupled by means of a thread to a screw cover 14 in such a way as to fasten together all aforementioned components.

The manoeuvring element 7, fitted with two tabs to facilitate manual grip, is able to rotate around an axis of rotation 15, corresponding to the central axis of the cover, according to a first direction 16 for locking and in a second direction 17 for unlocking the jaws 4.

The control mechanism 5 comprises a crank mechanism 18 able to transform the rotations of the manoeuvring element 7 in said two directions, which can be of about 35 degrees - 40 degrees, into radial sliding motions of the jaws 4 respectively centripetal for locking and centrifugal for unlocking the jaws.

More specifically the control mechanism 5 further comprises a base support 19, preferably made of synthetic material, formed by two arms 19a and 19b arranged in a cross, each presenting peripherally two radial sliding tracks 20 which can be closed at the top by U-bolts 21 also made of synthetic material.

In each radial track 20 is slidingly engaged a guide appendix 4c of a respective jaw 4.

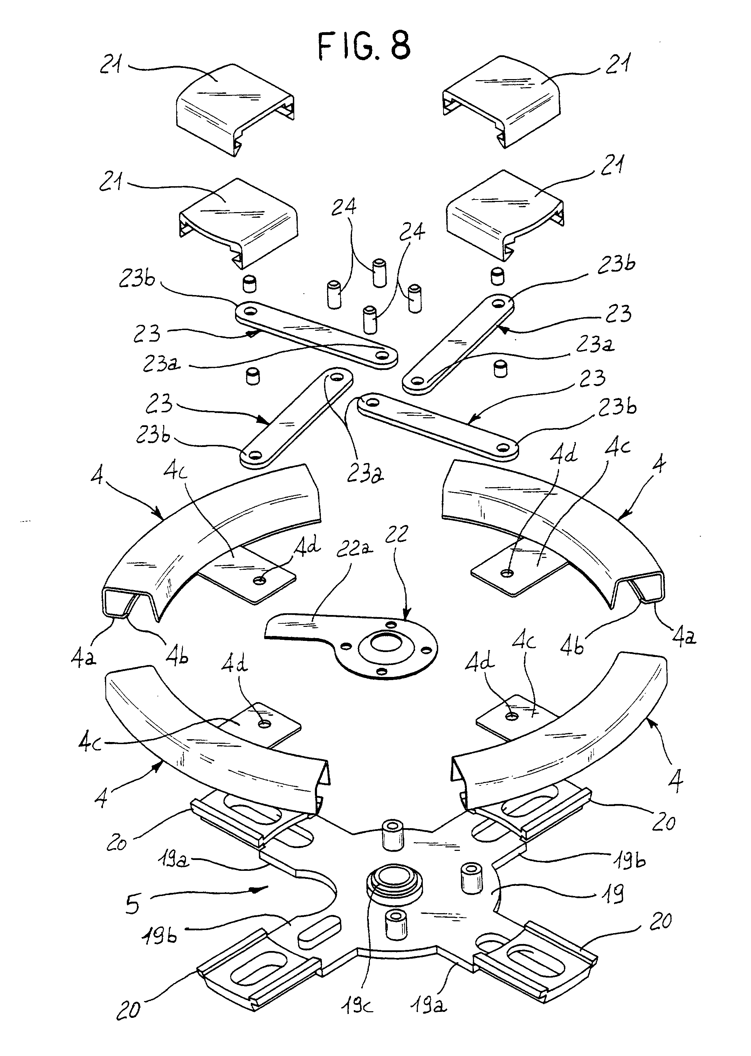

With particular reference to Figure 8, the crank mechanism 18 comprises a disk element 22 able to rotate around the axis of rotation 15 by rotatory coupling with a cylindrical guide 19c emerging centrally from the base support 19. The crank mechanism 18 further comprises four connecting rods 23, i.e. one for each movable jaw 4, terminally hinged, at their first end 23a, to the disk element 22 and at their second end 23b, to a hinging seat 4d of a guide appendix 4c of the respective jaw 4.

Hinging rivets 24, provided with projecting head, pivotally engage the first ends 23a of the connecting rods 23 to the disk element 22 and insert with the heads in housing seats 7a of the manoeuvring element 7 in such a way as to make it rotatorily integral to the disk element 22 itself.

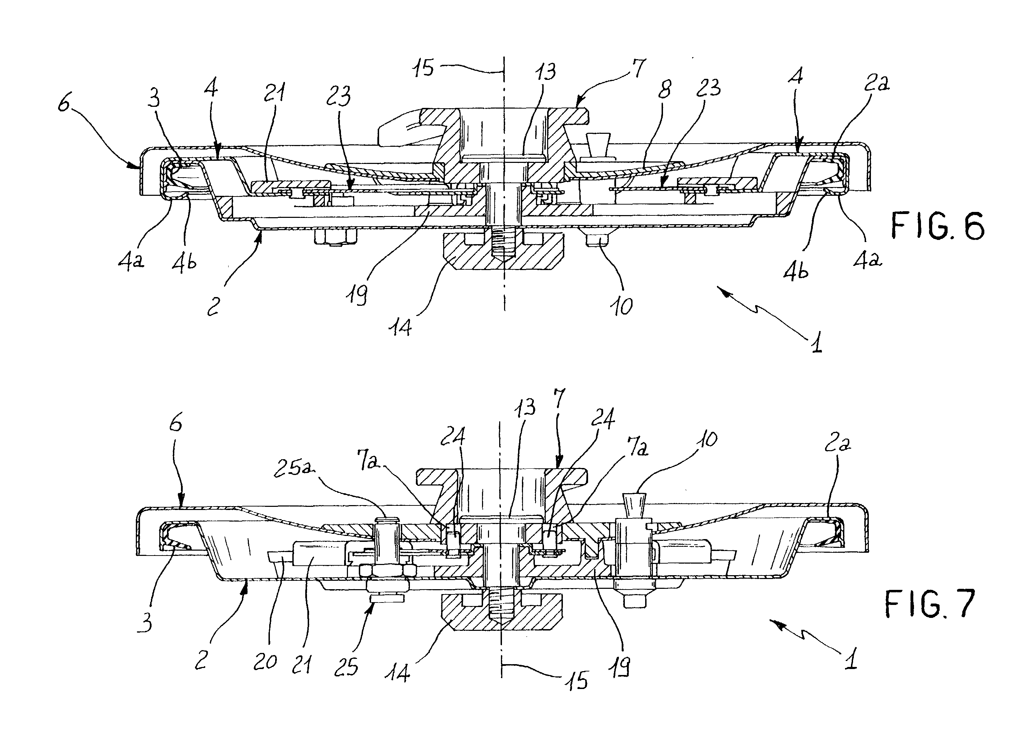

Lastly the safety device 9 (Figures 3 and 7) comprises a stop expansion 22a integral to the disk element 22 and projecting therefrom on its development plane and a valve assembly 25, known in itself, engaged to the box body 2 and comprising a movable pivot pin 25a which, at a pre-set pressure inside the pot, lifts thereby interfering with said stop expansion 22a to prevent the manoeuvring element 7 and the disk element 22 associated thereto from rotating in the unlocking direction 17.

The operation of a cover for pressure posts, described above mainly in the structural sense, is as follows.

After setting the box body 2 of the cover onto the edge of a pot, in such a way that the sealing gasket 3 is in contact therewith, the cover is locked by rotating the manoeuvring element 7 by about 35 degrees in the locking direction 16.

The manoeuvring element 7 initiates the rotation of the disk element 22 which effects the oscillation of the connecting rods 23. The latter in turn pull inwards the movable jaws 4 which slide radially on the sliding tracks 20 until coming to a stop against the edge of the pot whereto the cover is coupled (see Figure 6).

The pressure inside the pot causes the lifting of the movable pivot pin 25a which, interfering with the stop expansion 22a, prevents the disk element 22 from rotating in the unlocking direction 17 (see Figure 7).

Once cooking operations are completed, after the steam has been vented off, since the movable pivot pin 25 can be lowered it is possible to rotate the manoeuvring element 7 in the unlocking direction so that the connecting rods 23 thrust the jaws 4 outwards.

The invention attains important advantages.

First of all, the control mechanism that realises the radial displacements of the movable jaws has a simple structure and essentially flat shape. It can therefore be housed in a box body of reduced thickness and hence of high aesthetic acceptability.

Moreover, the simplicity of the structure of the control mechanism causes the overall weight of the cover to be low and eases the assembly operations of the cover itself.

Lastly, it should be noted that the activation of the manoeuvring element is executed rapidly since a limited rotation is necessary both to lock and to unlock the jaws and requires an extremely limited effort

## Claims

1. Cover for pressure pots comprising:
a box body (2) defining the base of the cover and fitted with a sealing gasket (3),
an element (6) for covering at least the box body,
at least two movable jaws (4) presenting grip portions (4a) able to engage an upper edge of a pot provided for coupling to the cover,
a mechanism (5) for controlling the movable jaws (4) housed inside the box body (2), and able to impose to said movable jaws (4) sliding motions in radial direction with respect to said box body (2) to determine the passage of said grip portions (4a) from a disengaged position to an engaged position and viceversa with respect to the upper edge of the pot, said mechanism (5) comprising at least a cranking mechanism (18)presenting a disk element (22) able to rotate around an axis of rotation (15) and integral with said manoeuvring element (7), said cranking mechanism (18) being able to transform rotatory displacements around said axis of rotation (15) of the manoeuvring elements (7) in a first locking direction (16) and in a second unlocking direction (17) into respectively centripetal and centrifugal radial sliding motions of the movable jaws (4),
an element (7) for manoeuvring the control mechanism (5) emerging form the cover element (6), and
at least a safety device (9) able to prevent, once a pre-set pressure inside the pot has been exceeded, the manoeuvring element (7) from being displaced thereby unlocking the jaws of the pot itself, **characterized by** the fact that said safety device (9) comprises:
a stop expansion (22a) integral to said disk element (22) and projecting therefrom from its development plane,
and a valve assembly (25) provided with a movable pivot pin (25a) able to interfere with said stop expansion (22a) when said pre-set pressure inside the pot is exceeded in such a way as to prevent the rotation of said disk element (22) in the unlocking direction (17).

2. Cover according to claim 1, **characterised in that** said control mechanism (5) comprises radial sliding tracks (20) for said movable jaws (4).

3. Cover according to claim 1 **characterised in that** said cranking mechanism (18) comprises a connecting rod (23) for each movable jaw (4) terminally hinged at a first end (23a) to said disk element (22) and at a second end (23b) to the respective jaw (4).

4. Cover according to claim 2, **characterised in that** said control mechanism (5) comprises a base support (19) formed by the arms arranged in a cross (19a, 19b) peripherally presenting said tracks (20) for the radial sliding of the jaws and centrally a cylindrical guide (19c) for the rotatory coupling with said rotating disk element (22).

5. Cover according to claims 3 and 4, **characterised in that** each of said movable jaws (4) comprises a guide appendix (4c) slidingly engaged in the respective sliding track (20) of said base support (19) and presenting a seat (4d) for hinging to said second end (23b) of the respective connecting rod (23).

6. Cover according to claim 3, **characterised in that** in correspondence with said first hinging end (23a) of said connecting rod (23) to the disk element (22) a hinging rivet (24) is provided, fitted with a projecting head able to be inserted into a housing seat (7a) obtained in said manoeuvring element (7).

## Patentansprüche

1. Deckel für Dampfdruckkochtöpfe, umfassend:
- einen die Basis des Deckels festlegenden und mit einer Dichtung (3) versehenen Dosenkörper (2),
- ein Abdeckelement (6) mindestens des Dosenkörpers,
- mindesten zwei bewegliche Backen (4), die Greifabschnitte (4a) aufweisen, die in der Lage sind, einen oberen Rand eines für das Ansetzen am Deckel vorgesehenen Topfes zu ergreifen,
- eine Betätigungseinrichtung (5) der beweglichen Backen (4), die innerhalb des Dosenkörpers (2) aufgenommen und in der Lage ist, den beweglichen Backen (4) gleitende Bewegungen in gegenüber dem Dosenkörper (2) radialer Richtung aufzuerlegen, um den Übergang der Greifabschnitte (4a) von einer Freigabestellung in eine Eingriffsstellung und umgekehrt gegenüber dem oberen Rand des Topfes zu bewirken, wobei die Betätigungseinrichtung (5) mindestens einen Kurbeltrieb (18) umfasst, der ein Scheibenelement (22) aufweist, das um eine Drehachse (15) drehbar ist und an einem Bedienungselement (7) fest liegt, wobei der Kurbeltrieb (18) fähig ist, Umdrehungsbewegungen um die Drehachse (15) der Bedienungselemente (7) herum in einer ersten Einspannrichtung (16) und einer zweiten Freigaberichtung (17) in jeweils zentripetale und zentrifugale Radialverstellungen der beweglichen Backen (4) umzuwandeln.
- ein Bedienungselement (7) der Betätigungseinrichtung (5), das sich vom Abdeckungselement (6) erhebt, und
- mindestens eine Sicherheitsvorrichtung (9), die fähig ist, bei Überwinden eines vorgegebenen Druckes innerhalb des Topfes die Verstellung des Bedienungselementes (7) für die Freigabe des Backen des Topfes selbst zu verhindern, **dadurch gekennzeichnet, dass** die Sicherheitsvorrichtung (9) umfasst:
- einen Anschlagsschuh (22a), der am Scheibenelement (22) festliegt und von demselben aus seiner Abwicklungsebene vorsteht,
- und eine Ventileinheit (25), die mit einem beweglichen Bolzen (25a) versehen ist, der sich mit dem Anschlagschuh (22a) beim Überwinden des vorgegebenen Druckes innerhalb des Topfes derart überschneidet, **dass** die Drehung des Scheibenelementes (22) in die Freigaberichtung verhindert wird.

2. Deckel nach Anspruch 1, **dadurch gekennzeichnet, dass** die Betätigungseinrichtung (5) radiale Gleitbahnen (20) der beweglichen Backen (4) umfasst.

3. Deckel nach Anspruch 1, **dadurch gekennzeichnet, dass** der Kurbeltrieb (18) eine Kurbelstange (23) für jede bewegliche Backe (4) umfasst, die endseitig an einem ersten Ende (23a) am Scheibenelement (22) und an einem zweiten (23b) an der entsprechenden Backe (4) angelenkt ist.

4. Deckel nach Anspruch 2, **dadurch gekennzeichnet, dass** die Betätigungseinrichtung (5) ein Basislager (19) umfasst, das durch kreuzweise angeordnete Arme (19a, 19b) gebildet wird, die längs des Umfangs die radialen Gleitbahnen (20) der Backen und mittig eine zylindrische Führung (19c) für die Umdrehungskupplung mit dem drehbaren Scheibenelement (22) aufweisen.

5. Deckel nach Anspruch 3 und 4, **dadurch gekennzeichnet, dass** jede der beweglichen Backen (4) eine Führungsnase (4c) aufweist, die in der entsprechenden Gleitbahn (20) des Basislagers (19) in Eingriff steht und einen Anlenksitz (4d) zur Anlenkung am zweiten Ende (23b) der entsprechenden Kurbelstange (23) aufweist.

6. Deckel nach Anspruch 3, **dadurch gekennzeichnet, dass** im Bereich des ersten Anlenkendes (23a) der Kurbelstange (23) am Scheibenelement (22) ein Anlenkniet (24) vorgesehen ist, der mit einem vorspringenden Kopf versehen ist, der in eine im Bedienungselement (7) ausgenommene Aufnahme (7a) eingeführt werden kann.

## Revendications

1. Couvercle pour des cocottes-minute comprenant:
- un corps en forme de boîtier (2) définissant la base du couvercle et muni d'une garniture étanche (3),
- un élément (6) de couverture au moins du corps en forme de boîtier,
- au moins deux mâchoires mobiles (4) présentant des portions d'accrochage (4a) en mesure d'engager un bord supérieur d'une cocotte destinée à s'enclencher au couvercle,
- un mécanisme (5) de commande des mâchoires mobiles (4) logé à l'intérieur du corps en forme de boîtier (2), et en mesure d'imposer auxdites mâchoires mobiles (4) des mouvements de glissement en direction radiale par rapport audit corps en forme de boîtier (2), en vue de déterminer le passage desdites portions d'accrochage (4a) d'une position dégagée à une position engagée et vice versa par rapport au bord supérieur de la cocotte, ledit mécanisme (5) comprenant au moins un mécanisme bielle-manivelle (18) présentant un élément en forme de disque (22) susceptible de tourner autour d'un axe de rotation (15) et solidaire dudit élément de manoeuvre (7), ledit mécanisme bielle-manivelle étant en mesure de transformer des déplacements rotatoires autour dudit axe de rotation (15) des éléments de manoeuvre (7) dans une première direction de blocage (16) et dans une deuxième direction de blocage (17) respectivement en mouvements de glissement radiaux centripètes et centrifuges des mâchoires mobiles (4),
- un élément de manoeuvre du mécanisme de commande (5) faisant saillie de l'élément de couverture (6), et
- au moins un dispositif de sûreté (9) en mesure d'empêcher que, quand une pression préétablie est dépassée à l'intérieur de la cocotte, l'élément de manoeuvre (7) soit déplacé causant par conséquent le déblocage des mâchoires de la cocotte elle-même, **caractérisé en ce que** ledit dispositif de sûreté (9) comporte:
- une expansion d'arrêt (22a) solidaire dudit élément en forme de disque (22) et faisant saillie de ce dernier à partir de son plan de développement,
- et un ensemble formant soupape (25) pourvu d'un pivot mobile (25a) en mesure d'interférer avec ladite expansion d'arrêt (22a) quand ladite pression préétablie est dépassée à l'intérieur de la cocotte, de telle sorte qu'on empêche la rotation dudit élément en forme de disque (22) dans la direction de déblocage (17).

2. Couvercle selon la revendication 1, **caractérisé en ce que** ledit mécanisme de commande (5) comporte des voies de glissement radial (20) pour lesdites mâchoires mobiles (4).

3. Couvercle selon la revendication 1, **caractérisé en ce que** ledit mécanisme bielle-manivelle (18) comporte une bielle (23) pour chaque mâchoire mobile (4) articulée, à une première extrémité (23a), sur ledit élément en forme de disque (22) et, à une deuxième extrémité (23b), sur la mâchoire respective (4).

4. Couvercle selon la revendication 2, **caractérisé en ce que** ledit mécanisme de commande (5) comporte un support de base (19) constitué des bras en croix (19a, 19b) présentant sur leur périphérie lesdites voies de glissement radial (20) des mâchoires et au centre un guidage cylindrique (19c) pour l'accouplement rotatoire audit élément tournant en forme de disque (22).

5. Couvercle selon les revendications 3 et 4, **caractérisé en ce que** chacune desdites mâchoires mobiles (4) comporte une pièce terminale de guidage (4c) engagée de manière coulissante dans la voie de glissement respective (20) dudit support de base (19) et présentant un logement (4d) pour l'articulation de ladite deuxième extrémité (23b) de la bielle (23) respective.

6. Couvercle selon la revendication 3, **caractérisé en ce qu'**on prévoit, en correspondance de ladite première extrémité d'articulation (23a) de ladite bielle (23) sur l'élément en forme de disque (22), un rivet d'articulation muni d'une tête saillante destinée à être introduite dans un siège de logement (7a) obtenu dans ledit élément de manoeuvre (7).
